Europäisches Patentamt

European Patent Office

Office européen des brevets

(11) Numéro de publication: **0 310 102**
**A1**

## (12) DEMANDE DE BREVET EUROPEEN

(21) Numéro de dépôt: 88116149.1

(22) Date de dépôt: 30.09.88

(51) Int. Cl.⁴: **B65G 47/51 , B65G 51/03**

(30) Priorité: 02.10.87 FR 8713673

(43) Date de publication de la demande:
**05.04.89 Bulletin 89/14**

(84) Etats contractants désignés:
**AT BE CH DE ES FR GB GR IT LI LU NL SE**

(71) Demandeur: **ETABLISSEMENTS NEU**
**70, Rue du Collège**
**F-59708 Marcq en Baroeul Cedex(FR)**

(72) Inventeur: **Blic, Olivier**
**Résidence Pasteur 23/31 Rue Hentgès**
**FR-59200 Tourcoing(FR)**
Inventeur: **Carlier, Michel**
**125 Avenue du Maire Catteau**
**FR-59118 Wambrechies(FR)**

(74) Mandataire: **Casalonga, Axel et al**
**BUREAU D.A. CASALONGA - JOSSE**
**Morassistrasse 8**
**D-8000 Munich 5(DE)**

(54) **Procédé et dispositif d'accumulation d'objets dans une installation de transport pneumatique.**

(57) Le dispositif est adapté à l'accumulation d'une quantité variable d'objets comportant une collerette (9) au voisinage de leur extrémité supérieure, en particulier de bouteilles en matière plastique (8). La manutention des objets est faite dans chaque file par un écoulement d'air provenant d'un caisson allongé disposé au-dessus du trajet des objets, présentant une paroi inférieure munie d'une fente longitudinale dont les bords servent de guide pour la collerette (9) des objets (8), une goulotte de soufflage présentant des fentes latérales pour l'écoulement d'air étant placée au-dessus de la fente longitudinale de façon que l'air agisse sur l'extrémité supérieure des objets en provoquant leur déplacement. Le dispositif comporte plusieurs files d'accumulation (2a, 2b, 2c, 2d) parallèles, indépendantes et séparées pouvant être mises sélectivement et successivement en communication avec un trajet de distribution (4) relié à la file amont (6) et avec un trajet de collecte (5) relié à la file aval (7), chaque file d'accumulation comportant en outre, du côté aval, un dispositif d'arrêt (22a, 22b, 22c, 22d) commandé capable de bloquer le déplacement des objets.

FIG.1

# PROCEDE ET DISPOSITIF D'ACCUMULATION D'OBJETS DANS UNE INSTALLATION DE TRANSPORT PNEUMATIQUE.

L'invention a pour objet un procédé et un dispositif d'accumulation d'une quantité variable d'objets, en particulier de récipients vides tels que des bouteilles en matière plastique dans une installation de transfert pneumatique.

Les divers traitements effectués sur des objets ou des contenants, y compris leur remplissage, nécessitent plusieurs machines qui sont reliées entre elles dans une installation complète par des transporteurs, par exemple des transporteurs à palettes. Pour qu'une machine située en aval soit toujours continuellement alimentée malgré d'éventuels ralentissements dans le fonctionnement d'une machine située en amont, ou au contraire pour qu'une telle machine amont puisse continuer à produire même en cas d'arrêt d'une machine aval, on prévoit généralement entre chaque machine, une zone d'accumulation. Cette zone d'accumulation peut être constituée par un transporteur à voie unique large à partir duquel les objets ou récipients sont ensuite transférés sur un transporteur à voie étroite relié à la machine située en aval. On obtient ainsi une réserve d'objets ou de récipients sur une file pratiquement ininterrompue.

La pression qui résulte de cette accumulation à voie unique entraîne des perturbations répétées, en particulier par l'apparition de zones de bourrage en forme de "ponts" qui se forment dans le courant des objets ou récipients sur le transporteur d'accumulation. Pour éviter ces difficultés, on peut envisager de soumettre le transporteur d'accumulation à des vibrations. Ces vibrations entraînent cependant des risques de chute des objets ou des récipients. D'autre part certains récipients particulièrement instables tels que les bouteilles en matière plastique dont le fond comporte une pluralité de bossages en forme de pétales ne peuvent pratiquement pas être transportés sur un tel dispositif d'accumulation à palettes en raison des risques de chutes importants qui rendent nécessaire une surveillance accrue et une régulation complexe de l'ensemble du dispositif.

Pour diminuer la pression sur les objets ou les récipients dans la zone d'accumulation, on peut envisager de faire varier la vitesse des moyens de transport en adaptant en particulier la vitesse du transporteur d'accumulation à celle de l'installation, par action sur la régulation des moteurs électriques ou hydrauliques entraînant les dispositifs de transport. Malgré la diminution légère de pression qui en résulte sur les objets ou récipients transportés dans la zone d'accumulation, il subsiste inévitablement une certaine pression, due au principe même d'un tel accumulateur et un risque de chutes important, préjudiciable à la productivité de l'ensemble de l'installation.

Pour le transport des objets comportant une collerette au voisinage de leur extrémité supérieure et en particulier les bouteilles en matière plastique, on a déjà préconisé d'utiliser des convoyeurs à air dans lequel les récipients sont transportés sur une seule file. La manutention des objets est faite au moyen d'un écoulement d'air provenant d'un caisson allongé disposé au-dessus du trajet des objets et présentant une paroi inférieure munie d'une fente dont les bords servent de guides pour la collerette des objets. Une goulotte de soufflage présentant des fentes pour l'écoulement d'air est placée au-dessus de la fente longitudinale de façon que l'air agisse sur l'extrémité supérieure des objets en provoquant leur déplacement. Des dispositifs de ce type sont décrits par exemple dans le brevet britannique GB 2 092 981 (Smith), le brevet US 3 850 478 (HURD) ou encore la demande de brevet européen EP 0 070 931 (The MOTCH and MERRYWEATHER) auquel on pourra se référer pour plus de précision.

Lorsqu'on utilise des dispositifs de manutention pneumatique de ce type, en particulier pour des bouteilles vides en matière plastique, la zone d'accumulation qu'il est nécessaire de prévoir entre une machine amont et une machine aval d'une installation de traitement, par exemple de remplissage, est en général réalisée en prévoyant un parcours sinueux d'accumulation qui augmente la longueur totale de la file de transport entre les machines considérées. Si un tel accumulateur donne satisfaction pour de petites capacités, il entraîne des longueurs importantes, par exemple de l'ordre de 50 mètres pour des accumulations de l'ordre de 500 bouteilles. Le trajet d'accumulation jouant simultanément le rôle d'une ligne de transfert directe entre la machine amont et la machine aval on constate un manque de souplesse de l'installation. Chaque objet doit parcourir, depuis la machine amont jusqu'à la machine aval, toute la longueur du parcours sinueux du convoyeur, ce qui peut également entraîner des problèmes de marquage des produits transportés en raison du frottement sur les guides latéraux. De plus le temps de transport pour parcourir la longueur totale du trajet d'accumulation entraîne des difficultés dans le fonctionnement général de l'installation. Enfin un tel dispositif d'accumulation nécessite une surface au sol relativement importante.

L'invention a donc pour objet un procédé et un dispositif d'accumulation à capacité variable éliminant tout risque de chutes des objets transportés et accumulés avec une pression minime entre les différents objets accumulés. L'invention a également pour objet un tel procédé et dispositif d'accumulation garantissant la formation d'une file ininterrompue d'objets à l'entrée de la machine aval à desservir et quelle que soit la capacité de celle-ci, évitant en outre tout risque de bourrage par formation de ponts dans le dispositif d'accumulation.

A cet effet, le procédé d'accumulation d'une quantité variable d'objets, en particulier de récipients vides, selon l'invention, prévoit de transporter les objets par un courant d'air agissant sur les objets entre une machine de traitement amont d'où sortent les objets sur une file et une machine de traitement aval dans laquelle pénètrent les objets sur une file et de disposer entre la machine amont et la machine aval plusieurs files d'accumulation parallèles indépendantes et séparées capables d'être alimentées et vidangées sélectivement sous l'action du même courant d'air, en fonction d'informations portant sur l'absence ou la présence d'objets dans certains points de diverses files.

Les files d'accumulation indépendantes peuvent être avantageusement parallèles disposées côte à côte et, dans un mode de réalisation préféré, rectilignes, bien qu'une disposition courbe puisse également être envisagée.

Le changement de direction des objets en déplacement entraînant le transfert d'une file d'accumulation à une autre file d'accumulation en un point de distribution amont se fait en arrêtant le flux des objets en amont du point de distribution puis en déplaçant un moyen d'aiguillage placé entre les deux files d'accumulation. Le transfert d'une première file d'accumulation à une deuxième file d'accumulation est de préférence commandé automatiquement en fonction du remplissage de la portion amont de la première file d'accumulation, le remplissage de cette portion amont signifiant que la totalité de ladite file d'accumulation est remplie.

De la même manière le changement de direction des objets en un point de collecte aval se fait en libérant une file d'accumulation déterminée et en fonction du remplissage de la portion aval de ladite file d'accumulation. Dans un mode de réalisation préféré, des moyens d'aiguillage peuvent également être prévus au voisinage du point de collecte aval des différentes files d'accumulation.

Dans un mode de réalisation avantageux du procédé de l'invention, l'alimentation et la vidange des différentes files d'accumulation peuvent être être faites en maintenant, parmi l'ensemble des files d'accumulation, une voie principale de transfert qui est alimentée et vidangée en priorité.

La mise en oeuvre du procédé de l'invention peut se faire avantageusement en vidangeant en premier l'objet qui a été alimenté en premier.

D'une manière générale la mise en oeuvre du procédé de l'invention peut être adaptée à chaque cas particulier, en commandant de manière appropriée la fermeture des différentes files d'accumulation dans leur portion aval, et en commandant les différents moyens d'aiguillage dans les portions amont des différentes files d'accumulation en fonction des informations fournies par les différents capteurs détectant la présence ou l'absence des objets dans les portions amont et aval des différentes files d'accumulation.

Le dispositif d'accumulation d'une quantité variable d'objets selon l'invention est particulièrement adapté à des objets comportant une collerette au voisinage de leur extrémité supérieure, en particulier des bouteilles en matière plastique vides ou des ébauches en vue de la fabrication de telles bouteilles. Le dispositif est destiné à être monté dans une installation de manutention entre une machine de traitement amont d'où sortent les objets sur une file amont et une machine de traitement aval dans laquelle pénètrent les objets sur une file aval. La manutention des objets est faite dans chaque file par un écoulement d'air provenant d'un caisson allongé disposé au-dessus du trajet des objets. Le caisson présente une paroi inférieure munie d'une fente longitudinale dont les bords servent de guides pour la collerette des objets. Une goulotte de soufflage présentant des fentes latérales pour l'écoulement d'air est placée au-dessus de la fente longitudinale de façon que l'air agisse sur l'extrémité supérieure des objets en provoquant ainsi leur déplacement. Selon l'invention, le dispositif comporte plusieurs files d'accumulation parallèles indépendantes et séparées pouvant être mises sélectivement et successivement en communication avec un trajet de distribution relié à la file amont et avec un trajet de collecte relié à la file aval. Chaque file d'accumulation comporte en outre, du côté aval, un dispositif d'arrêt commandé capable de bloquer le déplacement des objets dans la file d'accumulation concernée.

Au moins certaines files d'accumulation comportent, du côté amont, un moyen d'aiguillage commandé capable d'ouvrir ou de fermer la communication de la file d'accumulation avec le trajet de distribution. Un dispositif d'arrêt commandé placé dans la file amont est asservi aux différents moyens d'aiguillage de façon à arrêter le déplacement des objets pour permettre le mouvement des moyens d'aiguillage.

Du côté des trajets de collecte, il est possible de prévoir également des moyens d'aiguillage commandés qui facilitent le transfert des objets depuis une file d'accumulation jusque dans le trajet de collecte. Dans certaines applications, il est possible de supprimer cependant ces moyens d'aiguillage placés aux extrémités aval des files d'accumulation.

Chaque file d'accumulation comporte en outre, du côté de son extrémité amont, un capteur capable de détecter la présence d'un objet immobile correspondant au remplissage complet de la file correspondante.

Des moyens de commande automatique sont associés au dispositif d'accumulation de façon à actionner sélectivement, selon un programme préétabli et en fonction des signaux émis par les différents capteurs, les différents dispositifs d'arrêt et les moyens d'aiguillage dont le dispositif d'accumulation est muni. Il est ainsi possible, en fonction des besoins particuliers de l'installation, de mettre en oeuvre d'une manière particulière le procédé de l'invention en faisant passer sélectivement et successivement les différents objets dans les différentes files d'accumulation.

Chaque file d'accumulation comporte également du côté de son extrémité aval un capteur capable de détecter le passage des objets à la sortie de la file d'accumulation.

Enfin un capteur est également disposé sur la file aval afin de détecter, par la présence d'objets immobiles l'arrêt ou le ralentissement de la machine de traitement aval et d'entraîner automatiquement la mise en service du dispositif d'accumulation. Un autre capteur est également disposé sur la file aval et est capable de commander la vidange de l'accumulateur dès la détection de l'absence d'objets dans la file aval correspondant à la remise en service de la machine aval. Ces deux capteurs peuvent être combinés en un seul capteur associé à un dispositif de temporisation.

Dans un mode de réalisation avantageux du dispositif de l'invention, les différentes files d'accumulation présentent toutes la même longueur, la première file d'accumulation se trouvant dans le prolongement de la file amont tandis que la dernière file d'accumulation se trouve dans le prolongement de la file aval. Dans un autre mode de réalisation, les files d'accumulation peuvent présenter une longueur différente les unes des autres, la première file d'accumulation se trouvant alors dans le prolongement à la fois des files amont et aval.

Dans tous les cas, le trajet de distribuion fait un angle aigu avec les différentes files d'accumulation, cet angle étant compris de préférence entre environ 3° et 30°. Le trajet de collecte fait un angle obtus avec les différentes files d'accumulation, cet angle étant de préférence compris entre environ 177° et 150°.

L'invention sera mieux comprise à l'étude de la description détaillée de quelques modes de réalisation pris à titre d'exemples nullement limitatifs et illustrés par les dessins annexés sur lesquels :

la figure 1 est une vue schématique de dessus d'un premier mode de réalisation d'un dispositif d'accumulation selon l'invention dans laquelle on a supprimé les parois supérieures de façon à montrer schématiquement les différentes files d'accumulation;

la figure 2 est une vue à plus grande échelle en coupe selon II-II de la figure 1;

la figure 3 est une vue schématique en perspective d'un point de distribution entre deux files d'accumulation adjacentes montrant également le dispositif d'arrêt placé sur la file amont, l'ensemble étant vu de dessus;

la figure 4 est une vue en perspective analogue à celle de la figure 3 montrant la même partie du dispositif, mais vue de dessous; et

la figure 5 est une vue schématique analogue à la figure 1 montrant une variante d'un dispositif d'accumulation selon l'invention.

Tel qu'il est illustré sur les figures, le dispositif d'accumulation selon l'invention est plus particulièrement adapté à la manutention des bouteilles en matière plastique comportant une collerette à la base de leur goulot. Le dispositif d'accumulation référencé 1 dans son ensemble comporte plusieurs files d'accumulation 2a, 2b, 2c et 2d parallèles les unes aux autres et séparées ou non par des cloisons intermédiaires 3. Les différentes files 2a à 2d sont toutes rectilignes et présentent la même longueur. Les différentes extrémités amont peuvent toutes successivement et sélectivement être mises en communication avec un trajet de distribution 4 qui est incliné par rapport aux différentes files 2a à 2c d'un angle d'environ 30°. Du côté de leur extrémité aval, les différentes files 2a à 2d peuvent être mises en communication avec un trajet de collecte 5 parallèle au trajet de distribution 4.

Le dispositif d'accumulation 1 est relié d'un côté à une file individuelle amont 6 véhiculant les bouteilles provenant d'une machine de traitement amont non représentée sur la figure et d'autre part à une file individuelle aval 7 véhiculant les bouteilles en direction d'une machine de traitement aval non représentée sur la figure. La file amont 6 se trouve dans le prolongement de la première file d'accumulation 2a tandis que la file aval 7 se trouve dans le prolongement de la dernière file d'accumulation 2d.

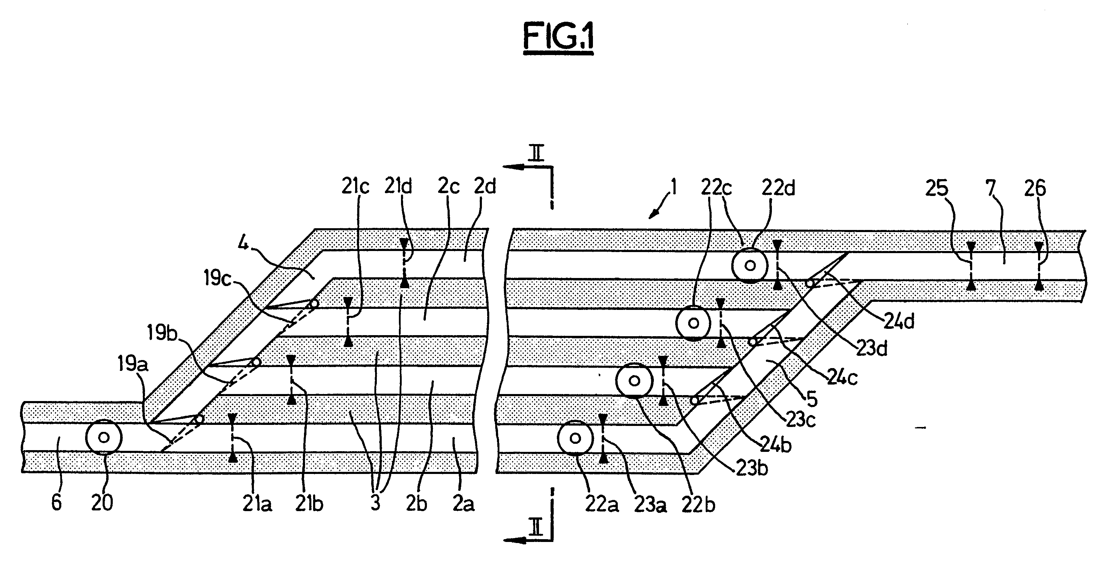

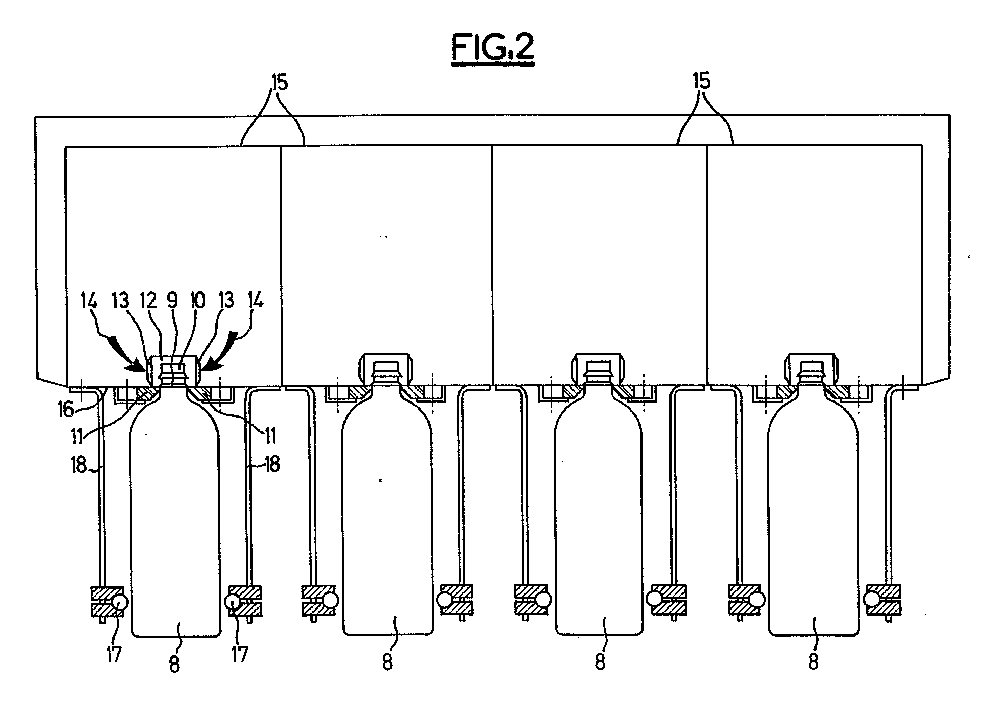

En se reportant à la figure 2 on voit que les différentes bouteilles en matière plastique 8 comportent une collerette 9 faisant saillie circonférentiellement à la base du goulot 10. La collerette 9 vient prendre appui sur deux guides supérieurs 11 en matière plastique ou autre matériau. Le goulot 10 se trouve au-dessus d'une fente longitudinale définie entre les deux guides 11 et à l'intérieur d'une goulotte de soufflage 12. La goulotte de soufflage 12 présente sur ses deux faces latérales des fentes de soufflage 13 orientées de façon qu'un écoulement d'air matérialisé par les flèches 14 provenant du caisson 15 agisse sur le goulot 10 pour provoquer le déplacement de la bouteille 8 le long du trajet matérialisé par les différentes files mentionnées précédemment. On notera que les files 2a à 2d, 6 et 7 ainsi que les trajets de distribution 4 et de collecte 5 repré sentés schématiquement sur la figure 1 correspondent en fait essentiellement aux goulottes de soufflage 12 visibles de manière plus précise sur la figure 2. Les caissons 15 présentent une forme allongée et sont disposés parallèlement les uns aux autres comme on peut le voir sur la figure 2. Leur face inférieure 16 présente la fente longitudinale mentionnée précédemment et dont les bords sont délimités par les guides latéraux 11 afin de permettre le maintien des bouteilles 8. Le dispositif est complété par des guides latéraux inférieurs 17 s'étendant sur tout le long du trajet, ne se trouvant pas normalement en contact avec la bouteille 8 mais permettant de limiter les mouvements de basculement de cette dernière lors de son déplacement. Les guides 17 placés de chaque côté d'une file sont soutenus de place en place par des montants 18.

En se reportant à nouveau à la figure 1, on voit que des moyens d'aiguillage 19a, 19b et 19c sont placés aux points d'embranchement entre le trajet de distribution 4 et les files d'accumulation 2a, 2b et 2c. Les moyens d'aiguillage comprennent une palette mobile autour d'un axe vertical de façon à pouvoir occuper deux positions définissant deux trajets possibles pour les bouteilles en déplacement provenant de la file amont 6. C'est ainsi que dans la position illustrée en trait plein sur la figure 1 l'aiguillage 19a bloque le passage depuis la file amont 6 vers le trajet de distribution 4 de sorte que les bouteilles en déplacement sont directement transportées sur la première file d'accumulation 2a. Au contraire dans la position représentée en pointillés, l'aiguillage 19a permettrait le passage des bouteilles par le trajet de distribution 4. Si l'aiguillage 19b se trouve dans la position illustrée en trait plein, les bouteilles sont alors transférées dans la deuxième file d'accumulation 2b. De la même manière si l'aiguillage 19b se trouve dans la position illustrée en pointillés, les bouteilles transitent depuis la file amont 6 jusqu'au trajet de distribution 4 puis dans la file d'accumulation 2c. Enfin lorsque tous les moyens d'aiguillage 19a, 19b, 19c sont dans la position illustrée en pointillés sur la figure 1, les bouteilles traversent l'intégralité du trajet de distribution 4 pour pénétrer dans la dernière file d'accumulation 2d.

Un dispositif d'arrêt commandé 20 représenté de manière symbolique sur la figure 1, est placé dans la file amont 6 de façon à bloquer le déplacement des bouteilles pendant le mouvement de rotation de l'un quelconque des dispositifs d'aiguillage 19a, 19b ou 19c.

Chaque file d'accumulation 2a à 2d comporte au voisinage de son extrémité amont proche du trajet de distribution 4, un capteur 21a, 21b, 21c et 21d qui est représenté de manière symbolique sur la figure 1 et qui est capable de détecter la présence d'une bouteille immobile dans la file correspondante, ce qui correspond au remplissage complet de la file d'accumulation en question.

Les différentes files d'accumulation 2a à 2d sont chacune munies, du côté de leur extrémité aval, d'un dispositif d'arrêt 22a, 22b, 22c et 22d ainsi que d'un capteur 23a, 23b, 23c et 23d placé dans la file correspondante en aval du dispositif d'arrêt 22a à 22d. Des aiguillages 24b, 24c et 24d sont également disposés aux points de jonction entre les files respectives 2b, 2c, 2d et le trajet de collecte 5.

Enfin le dispositif est complété par un capteur 25 placé dans la file aval 7 et un capteur 26 monté en aval du capteur 25 dans la même file aval 7.

Les différentes files d'accumulation 2a à 2d peuvent être alimentées et vidangées sélectivement en fonction des informations provenant des différents capteurs équipant le dispositif 1. D'une manière générale, le fonctionnement du dispositif 1 est tel que le transfert des bouteilles d'une première file d'accumulation à une deuxième file d'accumulation adjacente est commandé automatiquement en fonction du remplissage de la portion amont de la première file d'accumulation.

Si par exemple les différents aiguillages 19 et 24 se trouvent dans la position illustrée en trait plein sur la figure 1, les bouteilles transitent sous l'action de l'écoulement d'air, de la file amont 6 par la file d'accumulation 2a et le trajet de collecte 5 jusqu'à la file aval 7. Si la machine aval s'arrête, une accumulation de bouteilles se produit dans la file aval 7. Au moment où cette accumulation atteint le capteur 25 celui-ci déclenche la mise en fonction du dispositif accumulateur 1. A cet effet, le dispositif d'arrêt 22a est tout d'abord commandé ce qui provoque le début de l'accumulation des bouteilles dans la première file d'accumulation 2a. Cette accumulation se poursuit jusqu'à ce que le capteur 21a situé en amont détecte une bouteille immobile, ce qui correspond au remplissage complet de la première file d'accumulation 2a. Cette situation provoque automatiquement une action sur le dispositif d'arrêt 20 bloquant l'arrivée des bouteilles par la file amont 6 et permettant de modifier la position de l'aiguillage 19a qui passe dans la position illustrée en pointillés sur la figure 1. Le dispositif d'arrêt 20 est alors à nouveau ouvert ce qui permet le passage des bouteilles par une portion du trajet de distribution 4 dans la deuxième file d'accumulation 2b. A cet effet l'aiguillage 19b se trouve dans la position illustrée en trait plein sur la figure 1. De plus le dispositif d'arrêt 22b est en position de blocage comme d'ailleurs tous les dispositifs d'arrêt 22a à 22d. L'accumulation se produit ainsi jusqu'à ce que toutes les files du dispositif d'accumulation 1 soient remplies ce qui correspond à l'accumulation maximale. Dès que la machine aval a été remise en fonctionnement, ce qui est détecté par le capteur 26 repérant une absence de bouteille il est possible de vidanger l'une quelconque des files d'accumulation préalablement chargées. Dans un mode de réalisation avantageux, on vidangera de préférence les premières bouteilles entrées dans le dispositif d'accumulation 1 c'est-à-dire celles de la première file d'accumulation 2a, bien que l'on puisse envisager d'autres modes de fonctionnement. A cet effet, les différents aiguillages 24b à 24d étant maintenus dans la position illustrée en trait plein sur la figure 1, on ouvre le dispositif d'arrêt 22a ce qui provoque automatiquement la vidange de la file 2a par le trajet de collecte 5. Simultanément l'arrivée des bouteilles peut être modifiée en agissant tout d'abord sur le dispositif d'arrêt 20 et en remettant ensuite l'aiguillage 19a dans la position illustrée en trait plein sur la figure 1. La file d'accumulation 2a constitue alors en quelque sorte une voie principale de transfert, ouverte en priorité, tandis que les autres voies d'accumulation 2b, 2c et 2d servent de zone d'accumulation et de moyens de stockage et de déstockage. Les bouteilles se trouvant stockées dans ces files d'accumulation seront alors utilisées dans le cas où la machine aval fonctionnant normalement, c'est la machine amont qui se trouve arrêtée provisoirement. Dans ce cas l'absence de bouteilles sur la première file d'accumulation 2a est détectée par le capteur 23a qui provoque automatiquement le changement de position de l'aiguillage 24b mis dans la position illustrée en pointillés sur la figure 1 puis l'ouverture du dispositif d'arrêt 22b entraînant automatiquement la vidange de la deuxième file d'accumulation 2b. Tant que la machine amont reste arrêtée, le dispositif d'accumulation 1 est ainsi capable d'alimenter la machine aval en vidangeant successivement les différentes files d'accumulation comme il vient d'être dit.

Dans tous les cas, l'alimentation d'air en continu dans les différents caissons fait que les bouteilles sont toujours poussées par le flux d'air agissant sur leur goulot. Lorsque l'alimentation des bouteilles est arrêtée pendant une courte durée par un dispositif d'arrêt tel que le dispositif 20 pour permettre le changement de direction d'un aiguillage tel que l'aiguillage 19a, l'intervalle plus important créé lors de cette manoeuvre entre les bouteilles successives est rattrapé très rapidement en raison de l'accélération des bouteilles transportées par l'écoulement d'air.

Le dispositif ainsi mis en oeuvre évite les inconvénients des accumulateurs utilisés jusqu'à présent et en particulier tout risque de chute de bouteilles, les bouteilles étant maintenues individuellement par leur collerette dans des files séparées. Cet accumulateur a air permet d'éviter une pression excessive entre les bouteilles transportées et transforme l'accumulation à friction mécanique des dispositifs connus antérieurement en une accumulation à friction aérodynamique qui supprime tout risque de déformation des produits. La collecte par vidange de plusieurs files d'accumulation sur la file unique aval peut s'effectuer à tout moment sans qu'il soit nécessaire de remplir la totalité des files de l'accumulateur. Il suffit pour cela de commander l'ouverture du dispositif d'arrêt 22a à 22d correspondant à la file désirée, dès que l'aiguillage 24b à 24d correspondant a été convenablement placé. Le dispositif d'arrêt 22 à 22d se referme automatiquement dès que la file correspondante a été complètement vidangée pour répéter la même manoeuvre de vidange sur les autres files. La longueur et le nombre des files de l'accumulateur 1 peuvent bien entendu être modifiés et adaptés à chaque cas en fonction du potentiel d'accumulation nécessaire.

La commande du fonctionnement du dispositif c'est-à-dire la succession des opérations de remplissage et de vidange des différentes files d'accumulation se fait avantageusement sous le contrôle d'un dispositif automatique non représenté sur les figures, qui reçoit les signaux provenant des différents capteurs et qui provoque l'ouverture et la fermeture des dispositifs d'arrêt ainsi que les changements de position des différents aiguillages.

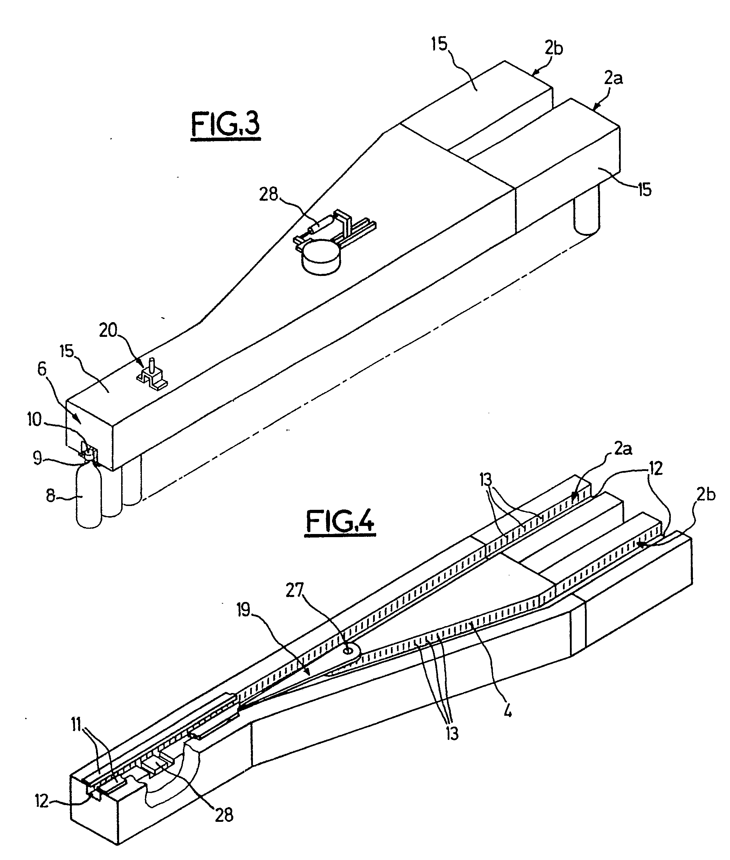

A titre d'exemple on a illustré un mode de réalisation possible pour un aiguillage 19 et un dispositif d'arrêt 20 sur les figures 3 et 4. Sur ces figures, on retrouve le caisson 15 de la file amont 6 ainsi que les bouteilles 8 suspendues par leur collerette 9. Pour simplifier, on n'a représenté sur ces figures que deux files d'accumulation 2a et 2b. La languette mobile 19 qui constitue la partie active de l'aiguillage est montée rotative autour d'un axe vertical 27 qui peut être entraîné en rotation par la tringlerie 28 sous l'action d'un moteur non représenté sur la figure. Le dispositif d'arrêt 20 comprend unt butée mobile 28 qui peut se déplacer verticalement en traversant la paroi supérieure de la goulotte 12 jusqu'à venir bloquer le passage à l'intérieur de ladite goulotte 12 d'un récipient 8 en agissant sur la partie supérieure du goulot 10. Le déplacement vertical de la butée mobile 28 est provoqué par un moteur d'entraînement non illustré sur la figure.

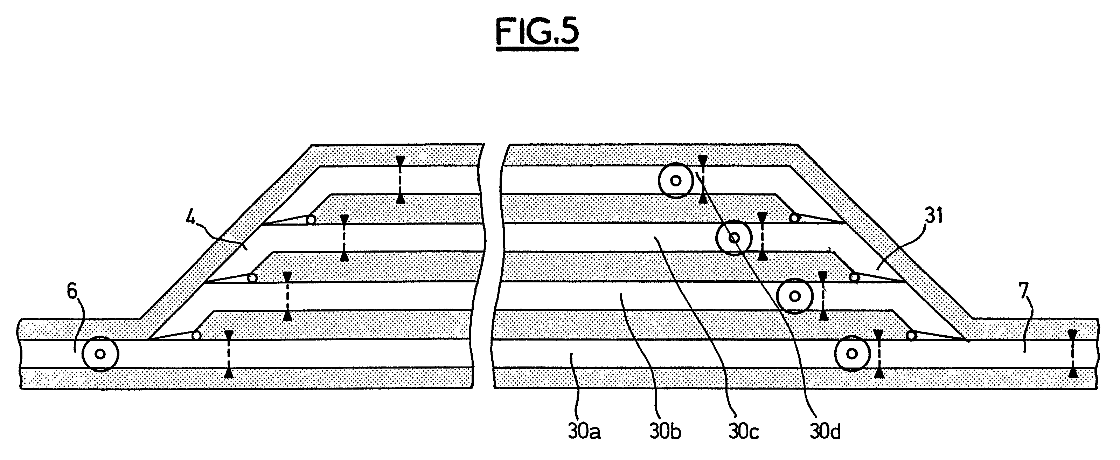

Dans un autre mode de réalisation de l'invention illustré sur la figure 5 les différentes files d'accumulation 30a, 30b, 30c et 30d sont toutes de longueur différente. Elles sont disposées comme pour le mode de réalisation précédent parallèlement entre elles. Le trajet de distribution 4 est disposé de la même manière mais le trajet de collecte 31 est incliné de manière symétrique. La première file d'accumulation 30a se trouve dans le prolongement à la fois de la file amont 6 et de la file aval 7.

On pourrait bien entendu imaginer d'autres dispositions, le dispositif d'accumulation pouvant par exemple être réalisé en courbe au lieu de la structure rectiligne illustrée dans les modes de réalisation précédents.

## Revendications

1. Procédé d'accumulation d'une quantité variable d'objets, en particulier de récipients vides, transportés par un écoulement d'air agissant sur les objets entre une machine de traitement amont d'où sortent les objet sur une file amont (6) et une machine de traitement aval dans laquelle pénètrent les objets sur une file aval (7), l'accumulation étant effectuée sur plusieurs files d'accumulation (2a, 2b, 2c, 2d) parallèles, indépendantes et séparées, disposées côte à côte entre la file amont et la file aval et capables d'être alimentées et vidangées sélectivement en fonction d'informations sur l'absence ou la présence d'objets dans certains points des diverses files, caractérisé par le fait que l'on raccorde lesdites files d'accumulation du côté amont par un trajet de distribution (4) et du côté aval par un trajet de collecte (5), ces deux trajets étant disposés très obliquement par rapport auxdites files.

2. Procédé d'accumulation selon la revendication 1, caractérisé par le fait que le changement de direction des objets en déplacement entraînant le transfert d'une file d'accumulation vers une autre file d'accumulation en un point de distribution amont, se fait en arrêtant tout d'abord le flux des objets en amont du point de distribution, puis en déplaçant un moyen d'aiguillage situé à l'intersection oblique entre le trajet de distribution (4) et la file d'accumulation correspondante, et enfin en libérant à nouveau le flux des objets.

3. Procédé d'accumulation selon la revendication 2, caractérisé par le fait que le transfert d'une première file d'accumulation à une deuxième file d'accumulation est commandé automatiquement en fonction du remplissage de la portion amont de la première file d'accumulation.

4. Procédé d'accumulation selon l'une quelconque des revendications précédentes, caractérisé par le fait que le changement de direction des objets en déplacement entraînant la vidange d'une file d'accumulation en un point de collecte aval se fait en arrêtant tout d'abord le flux des objets en amont du point de collecte, puis en déplaçant un moyen d'aiguillage situé à l'intersection oblique entre le trajet de collecte (5) et la file d'accumulation correspondante, et enfin en libérant à nouveau le flux des objets.

5. Procédé d'accumulation selon la revendication 4, caractérisé par le fait que la mise en fonction de l'accumulation et de l'opération de vidange se font en réponse à la détection de l'état de la file aval.

6. Procédé d'accumulation selon l'une quelconque des revendications précédentes, caractérisé par le fait que l'alimentation et la vidange des différentes files d'accumulation sont faites en maintenant parmi l'ensemble des files d'accumulation, une voie principale de transfert qui est alimentée et vidangée en priorité.

7. Procédé d'accumulation selon l'une quelconque des revendications précédentes, caractérisé par le fait que l'alimentation et la vidange des différentes files d'accumulation sont faites en vidangeant en premier l'objet qui a été alimenté en premier.

8. Dispositif d'accumulation d'une quantité variable d'objets comportant une collerette (9) au voisinage de leur extrémité supérieure, en particulier de bouteilles en matière plastique (8), destiné à être monté dans une installation de manutention entre une machine de traitement amont d'où sortent les objets sur une file amont (6) et une machine de traitement aval dans laquelle pénètrent les objets sur une file aval (7), la manutention des objets étant faite dans chaque file par un écoulement d'air provenant d'un caisson allongé (15) disposé au-dessus du trajet des objets (8), présentant une paroi inférieure munie d'une fente longitudinale dont les bords (11) servent de guide pour la collerette (9) des objets (8), une goulotte de soufflage (12) présentant des fentes latérales (13) pour l'écoulement d'air étant placée au-dessus de la fente longitudinale de façon que l'air agisse sur l'extrémité supérieure (10) des objets (8) en provoquant leur déplacement, caractérisé par le fait qu'il comporte plusieurs files d'accumulation (2a, 2b, 2c, 2d) parallèles, indépendantes et séparées pouvant être mises sélectivement et successivement en communication avec un trajet de distribution (4) relié obliquement à la file amont (6) et avec un trajet de collecte (5) relié obliquement à la file aval (7), chaque file d'accumulation comportant en outre, du côté aval, un dispositif d'arrêt (22a, 22b, 22c, 22d) commandé capable de bloquer le déplacement des objets.

9. Dispositif selon la revendication 8, caractérisé par le fait que certaines files d'accumulation comportent, du côté amont, un moyen d'aiguillage (19a, 19b, 19c) commandé capable d'ouvrir et de fermer la communication de la file d'accumulation avec le trajet de distribution (4).

10. Dispositif selon la revendication 9, caractérisé par le fait qu'un dispositif d'arrêt (20) est placé dans la file amont (6) en amont du dispositif d'accumulation, la commande de ce dispositif d'arrêt étant synchronisée avec celle des différents moyens d'aiguillage.

11. Dispositif d'accumulation selon l'une quelconque des revendications 8 à 10, caractérisé par le fait que chaque file d'accumulation comporte, du côté amont, un capteur (21a, 21b, 21c, 21d) capable de détecter la présence d'un objet immobile correspondant au remplissage complet de la file correspondante.

12. Dispositif d'accumulation selon l'une quelconque des revendications 8 à 11, caractérisé par le fait que chaque file d'accumulation comporte, du côté aval, un capteur (23a, 23b, 23c, 23d) capable de détecter l'absence de défilement d'objets dans la file correspondante.

13. Dispositif d'accumulation selon l'une quelconque des revendications 8 à 12, caractérisé par le fait que certaines files d'accumulation comportent, du côté aval, un moyen d'aiguillage (14b, 24c, 24d) commandé capable d'ouvrir ou de fermer la communication de la file d'accumulation correspondante avec le trajet de collecte, ce mouvement étant synchronisé avec le fonctionnement des dispositifs d'arrêt placés dans les portions aval des différentes files d'accumulation.

14. Dispositif d'accumulation selon l'une quelconque des revendications 8 à 13, caractérisé par le fait qu'il comporte en outre des moyens de commande automatique capables d'actionner sélectivement et en fonction de signaux émis par les différents capteurs, les différents dispositifs d'arrêt et moyens d'aiguillage.

15. Dispositif d'accumulation selon l'une quelconque des revendications 8 à 14, caractérisé par le fait que chaque file d'accumulation comporte en outre des guides inférieurs (17) coopérant avec les faces latérales des portions inférieures des objets (8).

16. Dispositif d'accumulation selon l'une quelconque des revendications 8 à 15, caractérisé par le fait que des moyens de détection (25, 26) sont placés en aval du dispositif d'accumulation dans la file aval de façon à commander la mise en fonctionnement du dispositif d'accumulation par remplissage successif des files d'accumulation d'une part et la vidange du dispositif d'accumulation d'autre part.

17. Dispositif d'accumulation selon l'une quelconque des revendications 8 à 16, caractérisé par le fait que toutes les files d'accumulation présentent la même longueur, la première file d'accumulation (2a) se trouvant dans le prolongement de la file amont (6) tandis que la dernière file d'accumulation (2d) est dans le prolongement de la file aval (7).

18. Dispositif d'accumulation selon l'une quelconque des revendications 8 à 16, caractérisé par le fait que les files d'accumulation ont toutes une longueur différente, la première file d'accumulation (30a) étant dans le prolongement des files amont (6) et aval (7).

19. Dispositif d'accumulation selon l'une quelconque des revendications 8 à 18, caractérisé par le fait que le trajet de distribution fait avec les différentes files d'accumulation un angle aigu de 3° à 30° environ et que le trajet de collecte fait avec les différentes files d'accumulation un angle obtus de 177° à 150° environ.

# FIG.1

EP 0 310 102 A1

# FIG.2

EP 0 310 102 A1

FIG.3

FIG.4

## FIG.5

EP 0 310 102 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | EP-A-0 070 931 (MOTCH & MERRYWEATHER MACHINERY CO.)<br>* Page 5, ligne 21 - page 6, ligne 13; page 7, lignes 11-17; page 9, ligne 23 - page 10, ligne 2; figures *<br>--- | 1,8 | B 65 G 47/51<br>B 65 G 51/03 |
| A | DE-A-3 127 008 (ROBERT BOSCH GmbH)<br>* Page 5, lignes 2-7; page 6, lignes 14-18; page 9, lignes 4-9,17-32; page 10, lignes 5-26; page 11, lignes 1-18; page 11, ligne 27 - page 12, ligne 5; figures *<br>--- | 1-9,11-17 | |
| A | US-A-4 570 783 (NEWCOM et al.)<br>* En entier *<br>--- | 1-14,16,18,19 | |
| A | GB-A-1 277 194 (LAZENBY et al.)<br>* Page 3, lignes 42-50; figure 1 *<br>----- | 1 | |
| | | | **DOMAINES TECHNIQUES RECHERCHES (Int. Cl.4)**<br><br>B 65 G<br>B 67 C |

Le présent rapport a été établi pour toutes les revendications

| Lieu de la recherche | Date d'achèvement de la recherche | Examinateur |
|---|---|---|
| LA HAYE | 04-01-1989 | VAN DER ZEE W.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 

& : membre de la même famille, document correspondant

EPO FORM 1503 03.82 (P0402)